# EUROPÄISCHE PATENTSCHRIFT

(11) **EP 2 217 640 B1**
(45) Veröffentlichungstag und Bekanntmachung des Hinweises auf die Patenterteilung: **21.03.2012**
(21) Anmeldenummer: 08857930.5
(22) Anmeldetag: 01.12.2008
(51) Int. Cl.: C08G 77/458, C08G 18/61

(54) **SILICONHALTIGER POLYURETHANSCHAUM**
POLYURETHANE FOAM CONTAINING SILICON
MOUSSE DE POLYURÉTHANNE SILICONÉE

(30) Priorität: 04.12.2007 DE 102007055703
(43) Veröffentlichungstag der Anmeldung: 18.08.2010
(73) Patentinhaber: Wacker Chemie AG, 81737 München (DE)
(72) Erfinder: CREMER, Jens, 81379 München (DE); BALL, Peter, 84547 Emmerting (DE); STANJEK, Volker, 84539 Ampfing (DE)
(74) Vertreter: Budczinski, Angelika
(86) Internationale Anmeldenummer: PCT/EP2008/066538
(87) Internationale Veröffentlichungsnummer: WO 2009/071510

(56) Entgegenhaltungen:
- EP-B- 1 485 419
- DE-A1-102006 013 416

## Beschreibung

Die Erfindung betrifft verschäumbare Zubereitungen auf der Basis von Organosiliciumverbindungen, darin enthaltene hyperverzweigte Siloxane, siliconhaltige Polyurethanschäume mit niedrigen Dichten sowie Verfahren zu deren Herstellung.

Polyurethanschäume werden im Allgemeinen durch Reaktion eines Polyisocyanats mit Verbindungen, die zwei oder mehr aktive Wasserstoffatome enthalten, hergestellt. Die aktiven Wasserstoff enthaltenden Verbindungen sind üblicherweise Polyole, primäre und sekundäre Polyamine sowie Wasser. Zwischen diesen Reaktanden finden während der Herstellung eines Polyurethanschaumes zwei Hauptreaktionen statt. Diese Reaktionen müssen grundsätzlich simultan und mit einer kompetitiv ausgewogenen Rate während des Prozesses ablaufen, um einen Polyurethanschaum mit gewünschten physikalischen Eigenschaften zu erhalten. Die Reaktion zwischen dem Isocyanat und dem Polyol oder Polyamin, die üblicherweise als Gelreaktion bezeichnet wird, führt zu der Bildung eines Polymers mit hohem Molekulargewicht. Der Fortgang dieser Reaktion erhöht die Viskosität des Gemisches und trägt im Allgemeinen zur Quervernetzungsbildung mit polyfunktionellen Polyolen bei. Die zweite Hauptreaktion findet zwischen dem Polyisocyanat und Wasser statt. Diese Reaktion trägt zum Urethan-Polymerwachstum bei und ist für die Bildung von Kohlendioxidgas, welche das Schäumen unterstützt, wichtig. Demzufolge wird diese Reaktion oft als die Treibreaktion bezeichnet. Sowohl die Gel- als auch die Treibreaktionen finden in Schäumen statt, die teilweise oder vollständig mit Kohlendioxidgas getrieben werden. Wenn zum Beispiel die Kohlendioxidentwicklung im Vergleich mit der Gelreaktion zu schnell ist, neigt der Schaum zum Kollabieren. Ist alternativ die Gelausdehnungsreaktion im Vergleich mit der Kohlendioxid erzeugenden Treibreaktion zu schnell, wird der Schaumanstieg begrenzt, was einen Hochdichte-Schaum ergibt. Ebenfalls werden sich schlecht abgestimmte Quervernetzungsreaktionen nachteilig auf die Schaumstabilität auswirken.

Bei den eingesetzten Polyolen handelt es sich im Allgemeinen um Polypropylenglykole, welche gemäß dem Stand der Technik in den verschiedensten Topologien dargestellt werden können und sich voneinander im Molekulargewicht, dem Verzweigungsgrad und der OH-Zahl unterscheiden. Trotz der breiten Strukturvariation dieser Polyole und der damit verbundenen Maßschneiderung der Polyurethanschäume für nahezu jede Anwendung, weisen die kommerziell erhältlichen Polyurethanschäume ihre inhärente Brennbarkeit als gravierenden Nachteil auf. Trotz großer Anstrengungen ist es bisher nicht gelungen absolut unbrennbare PU-Weichschäume im Markt zu etablieren, obwohl es in den letzten Jahrzehnten nicht an intensiven Forschungsaktivitäten gefehlt hat, die Flammverzögerungseigenschaften von Polymerschäumen zu verbessern.

Ein Weg zu brandgehemmten PU-Weichschäumen wird mit den Silicon-Polyurethan-Weichschäumen beschritten. Hierbei wird die, in Standard-PU-Schäumen verwendete, gut brennbare Polyolkomponente durch nicht-brennbare OH-terminierte Siloxane ersetzt. Durch den Einsatz von Silicon-Polyurethan-Copolymeren, d.h. von Polysiloxanen, die auch Polyurethan- und/oder Harnstoffeinheiten enthalten, ist es möglich, derartige unbrennbare Schaumstoffe zu entwickeln, die neue und auf die jeweilige Anwendung genau zugeschnittene Kombinationen von Eigenschaften aufweisen.

Hierzu sei beispielsweise auf EP 1485419 B1 verwiesen, worin die Herstellung von Silicon-Polyurethan-Schaumstoffen ausgehend von Alkylamino- oder Alkylhydroxy-terminierten Siliconölen und Diisocyanaten im sog. "One-Shot-Verfahren" beschrieben ist. Des Weiteren beschreibt DE 102006013416 A1 die Herstellung von Silicon-PU-Schäumen aus Prepolymeren, welche auf der Basis von Alkylamino- oder Alkylhydroxy-terminierten Siliconölen und Diisocyanaten in einem lösungsmittelbasierten Prozess hergestellt werden.

Den bisher beschriebenen Silicon-Polyurethanschäumen ist gemein, dass sie auf der Basis von linearen oder nur sehr schwach, aber statistisch in der Seitenketten verzweigte Siloxanen hergestellt werden. Aufgrund dieser linearen Siloxankette findet bei der Verschäumung während der Steigphase kein schneller Molmassenaufbau statt, so dass während der Steigphase nur ein relativ langsamer Viskositätsanstieg erfolgt, wodurch die Polymermatrix auch nach beendeter Treibreaktion in der Regel leicht fließfähig ist und deshalb die feine Zellstruktur vor dem vollständigen Aushärten des Schaumes immer noch kollabieren kann. Selbst wenn nur ein geringer Teil der Zellstruktur in sich zusammenfällt, führt dies zu einer unregelmäßigen und groben Zellverteilung.

Um dem Zellkollaps bei Verwendung linearer Polyolkomponenten entgegenzuwirken, dürfen die Verstrebungen zwischen den einzelnen Schaumzellen während der Steigphase einen kritischen Durchmesser nicht unterschreiten. So bleibt gewahrt, dass die noch fließfähige Polymatrix dem drohenden Zusammenfall der Schaumstruktur entgegenwirken kann. Wird jedoch die gewünschte Schaumdichte zu niedrig gewählt, so werden die Zellverstrebungen während der Steigphase immer dünner, bis sie schließlich zu flexibel werden, um die Zellstruktur zu stabilisieren. Dementsprechend werden mit linearen Siloxanen im Allgemeinen nur Silicon-PU-Schäume mit Dichten deutlich oberhalb 100 kg/m³ erhalten.

Hyperverzweigte Polymere sind bereits bekannt und werden z.B. in dem Übersichtsartikel: C.Gao, D.Yan; Prog. Polym. Sci., 2004, 24, 183-275 in Bezug auf Synthese, Eigenschaften und Anwendungen ausführlich diskutiert. Hyperverzweigte Polymere zählen zu dendritischen Makromolekülen und besitzen eine stärkere Verzweigung als konventionell verzweigte Polymere, die hauptsächlich primäre oder sekundäre Zweige an einer linearen Hauptkette aufweisen. Bisher wurden für die Synthese von hyperverzweigten Polymeren divergente Synthesemethoden angewandt, wobei ein Monomer, das genau zwei verschiedene Arten funktioneller Gruppen besitzt, die miteinander aber nicht mit sich selbst reagieren, wobei die Funktionalität der Monomere insgesamt größer als zwei ist. Beispiele für geeignete Monomere sind solche, die eine funktionelle Gruppe A und zwei funktionelle Gruppen B besitzen, also ein AB₂-Monomer. Prinzipiell können alle Monomere ABₓ mit x > 1 verwendet werden. Die Verwendung von ABₓ-Monomeren in einer monomolekularen Polymerisation ist jedoch nur dann möglich, wenn die A- und B-Gruppen erst dann miteinander reagieren, wenn es in der Polymersynthese gewünscht ist, also nach Zugabe eines Katalysators oder durch eine Temperaturerhöhung. Alternativ dazu kann deshalb die Synthese von hyperverzweigten Polymeren auch mit zwei verschiedenen Monomertypen erfolgen, die jeweils nur eine Art funktioneller Gruppen, aber in unterschiedlicher Anzahl aufweisen, wie z.B. A₃- und B₂-Bausteine. Durch eine Reaktion dieser beiden A₃- und B₂-Typen lassen sich dann *in situ* A₂B und AB₂-Monomerblöcke erhalten (di-molekulare Polymerisation: allgemein mit Aₓ und By, wobei x>1 und y>2 sind). Solche Verfahren sind allgemein bekannt und z.B. in US-B 6,534,600 beschrieben.

Gegenstand der Erfindung sind verschäumbare Zubereitungen, die hyperverzweigte Siloxane (A) der Formel

V- (R²) ₚ₋ₘ ([SiR₂O] ₙ-SiR₂R¹)ₘ (I)

enthalten, worin
V einen p-wertigen Rest bedeutet,
R gleich oder verschieden sein kann und einen einwertigen, gegebenenfalls substituierten Kohlenwasserstoffrest bedeutet,
R¹ ein Rest der Formel

-Yₐ-A-C (O) -NH-Z-NCO (II)

ist, wobei
Y und Z unabhängig voneinander zweiwertige, gegebenenfalls substituierte Kohlenwasserstoffreste, die mit Heteroatomen unterbrochen sein können, bedeuten,
A die Bedeutung von -O- oder -NR³- hat mit R³ gleich Wasserstoffatom oder einwertiger, gegebenenfalls substituierter Kohlenwasserstoffrest und
a 0 oder 1 ist,
R² gleich oder verschieden sein kann und einwertige Reste darstellt,
n eine ganze Zahl größer oder gleich 1 bedeutet,
p eine ganze Zahl größer oder gleich 3 bedeutet und
m eine ganze Zahl größer oder gleich 3 bedeutet,
mit der Maßgabe, dass p größer oder gleich m ist.

Beispiele für R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α-und der β-Phenylethylrest.

Beispiele für substituierte Kohlenwasserstoffreste R sind Methoxymethylenreste, Ethoxymethylenreste, Dimethylaminomethylen- und Diethylaminomethylenreste.

Bevorzugt handelt es sich bei Rest R um einwertige, gegebenenfalls substituierte Kohlenwasserstoffreste mit 1 bis 40 Kohlenstoffatomen, besonders bevorzugt um Kohlenwasserstoffreste mit 1 bis 30 Kohlenstoffatomen, insbesondere um Kohlenwasserstoffreste mit 1 bis 6 Kohlenstoffatomen.

Beispiele für R³ sind Wasserstoffatom und die für Rest R angegebenen Beispiele.

Bevorzugt handelt es sich bei Rest R³ um Wasserstoffatom.

Bevorzugt handelt es sich bei Rest A um den Rest -NR³- mit R³ gleich der obengenannten Bedeutung.

Beispiele für Reste Y und Z sind jeweils unabhängig voneinander Ethylenreste, Propylenreste, Butylenreste, Pentylenreste, Hexamethylenreste, Methyloxyethylenreste, Toluolylenreste, Methylen-bis-phenylenreste, Phenylenreste, Naphtylenreste, Cyclohexylenreste und Isophoronreste.

Bevorzugt handelt es sich bei Y um zweiwertige, aliphatische, gegebenenfalls mit -NCO substituierte Kohlenwasserstoffreste, die mit Heteroatomen unterbrochen sein können, besonders bevorzugt um Propylen- und Methyloxyethylenreste, insbesondere um Methyloxyethylenreste.

Bevorzugt handelt es sich bei Z um zweiwertige, aromatische, gegebenenfalls mit -NCO substituierte Kohlenwasserstoffreste, die mit Heteroatomen unterbrochen sein können, besonders bevorzugt um Toluolylen- und Methylen-bis-phenylenreste, insbesondere um Toluolylenreste.

Besonders bevorzugt ist a gleich 1.

Beispiele für Reste R² sind Wasserstoffatom, Organyloxyreste, wie Methoxyreste, Ethoxyreste und Phenoxyreste, gegebenenfalls substituierte Kohlenwasserstoffreste, wie z.B. die bei Rest R genannten Beispiele, Organyloxymethylenreste, Morpholinomethylenreste, Piperazinomethylenreste, Acrylamidomethylenreste, Dimethylaminomethylenreste, Diethylaminomethylenreste, Dibutylaminomethylenreste, Phenoxymethylenreste und Methylmercaptomethylenreste sowie Siloxanylreste, die sowohl über Sauerstoff wie auch über Silicium an V gebunden sein können.

Bevorzugt handelt es sich bei Rest R² um Organyloxymethylenreste, besonders bevorzugt um den Methoxymethylenrest.

Beispiele für Rest V sind beliebige, bisher bekannte mehrwertige Reste, wie z.B. mehrwertige organische Reste, mehrwertige Silylreste und Borsäurereste.

Bevorzugt handelt es sich bei Rest V um mehrwertige organische Reste oder mehrwertige Silylreste, besonders bevorzugt um mehrwertige organische Reste.

Falls es sich bei Rest V um mehrwertige Silylreste handelt, sind SiO_{3/2} und SiO_{4/2} bevorzugt.

Falls es sich bei Rest V um mehrwertige organische Reste handelt, sind mehrwertige, gegebenenfalls mit Stickstoff- und/oder Sauerstoffresten substituierte Kohlenwasserstoffreste bevorzugt und solche der Formel

W- [R⁴-R⁵-C (O) -R⁶-R_{c}⁷- ] ₘ (IV)

besonders bevorzugt, wobei
W einen p-wertigen Kohlenwasserstoffrest bedeutet, der Heteroatome enthalten kann,
R⁴ gleich oder verschieden sein kann und einen zweiwertigen, gegebenenfalls substituierten Kohlenwasserstoffrest bedeutet,
R⁵ gleich oder verschieden sein kann und einen gegebenenfalls substituierten Kohlenwasserstoffrest, -O- oder -NR^{3'} - bedeutet mit R³' gleich einer der oben für R³ angegebenen Bedeutung,
R⁶ gleich oder verschieden sein kann und einen gegebenenfalls substituierten Kohlenwasserstoffrest, -O- oder -NR^{3"}- bedeutet mit R^{3"} gleich einer der oben für R³ angegebenen Bedeutung,
R⁷ gleich oder verschieden sein kann und einen zweiwertigen, gegebenenfalls substituierten Kohlenwasserstoffrest bedeutet,
c 0 oder 1 ist
und
p und m gleich eine der o.g. Bedeutungen hat, mit der Maßgabe, dass p größer oder gleich m ist.

Bevorzugt handelt es sich bei W um dreiwertige, aliphatische oder aromatische, gegebenenfalls Heteroatome enthaltende Kohlenwasserstoffreste, besonders bevorzugt um Cyanuratreste- und Biuretreste, insbesondere um Biuretreste.

Beispiele für Reste R⁴ und R⁷ sind jeweils unabhängig voneinander die für Y und Z angegebenen Reste.

Bevorzugt handelt es sich bei R⁴ um zweiwertige, gegebenenfalls substituierte Kohlenwasserstoffreste mit 1 bis 10 Kohlenstoffatomen, besonders bevorzugt um Phenylenreste, Tolylenreste und Hexamethylenreste, insbesondere um Hexamethylenreste.

Bevorzugt handelt es sich bei Rest R⁵ um -NH-.

Bevorzugt handelt es sich bei Rest R⁶ um -O-.

Bevorzugt handelt es sich bei R⁷, an dem im Fall von c=1 die Gruppen ([SiR₂O]ₙ-SiR₂R¹) sowie gegebenenfalls R² gemäß Formel (I) anknüpfen, um zweiwertige, aliphatische, gegebenenfalls substituierte Kohlenwasserstoffreste mit 1 bis 6 Kohlenstoffatomen, besonders bevorzugt um Propylen- und Methyloxyethylenreste, insbesondere um Methyloxyethylenreste. Falls c gleich 0 ist, knüpfen diese Gruppen direkt an R⁶ an.

Besonders bevorzugt ist c gleich 1.

Die erfindungsgemäß eingesetzten hyperverzweigten Siloxane (A) haben einen Isocyanat-Gehalt von bevorzugt 0,5 bis 10 Gew.-%, besonders bevorzugt 1 bis 5 Gew.-%.

Die erfindungsgemäß eingesetzten hyperverzweigten Siloxane (A) haben eine Viskosität von bevorzugt 100 bis 10 000 mPas, besonders bevorzugt 500 bis 5000 mPas, jeweils bei 25°C.

Ein weiterer Gegenstand der vorliegenden Erfindung sind hyperverzweigte Siloxane (A) der Formel

V - (R²) ₚ₋ₘ([S1R₂O]ₙ-SiR₂R¹)ₘ (I),

worin
V einen p-wertigen Rest bedeutet,
R gleich oder verschieden sein kann und einen einwertigen, gegebenenfalls substituierten Kohlenwasserstoffrest bedeutet,
R¹ gleich oder verschieden sein kann
und einen Rest der Formel (II) bedeutet,
R² gleich oder verschieden sein kann und einwertige Reste darstellt,
n eine ganze Zahl größer oder gleich 1 bedeutet, bevorzugt 1 bis 1000, besonders bevorzugt 5 bis 500, insbesondere 10 bis 100,
p eine ganze Zahl größer oder gleich 3, bevorzugt 3 bis 20, besonders bevorzugt 3 oder 4, bedeutet und
m eine ganze Zahl größer oder gleich 3, bevorzugt 3 bis 20, besonders bevorzugt 3 bis 4, bedeutet,
mit der Maßgabe, dass p größer oder gleich m ist.

Die erfindungsgemäßen hyperverzweigten Siloxane (A) können nach in der Siliciumchemie gängigen Verfahren hergestellt werden.

In einer bevorzugten Ausführung der Erfindung werden die erfindungsgemäßen hyperverzweigten Siloxane (A) der Formel (I) mit V gleich organischem Rest durch Umsetzung von linearen α,ω-aminoalkylfunktionalisierten, α,ω-hydroxyalkylfunktionalisierten Siloxanen oder α,ω-hydroxyfunktionalisierten Siloxanen (A1) mit Polyisocyanaten hergestellt. Bei der Umsetzung kann es sich um ein ein- oder mehrstufiges Verfahren handeln. Falls es sich um ein zweistufiges Verfahren handelt, wird im ersten Schritt Polyisocyanat gegenüber den Siloxanen (A1) im Unterschuss verwendet, wobei die hyperverzweigten Siloxane (A2) erhalten werden. Im nächsten Reaktionsschritt werden dann die hyperverzweigten Siloxane (A2) mit weiterem Polyisocyanat zur Reaktion gebracht, wobei dieses in einem Überschuss verwendet wird, so dass pro Mol Aminoalkylreste bzw. hydroxyalkylfunktionelle Reste der hyperverzweigten Siloxane (A2) mindestens 1 Mol, insbesondere 2 bis 10 Mol, Isocyanateinheiten eingesetzt werden. Der molare Überschuss an Isocyanaten wird vorzugsweise bei der Schaumbildung für die Umsetzung mit Wasser verbraucht.

In einer weiteren bevorzugten Ausführung der Erfindung werden erfindungsgemäße hyperverzweigte Siloxane (A) der Formel (I) mit V gleich Silylrest in einem zweistufigen Verfahren erhalten, wobei zunächst lineare α,ω-hydroxyterminierte Siloxane (A3) mit einem gegenüber (A3) reaktiven Silan, wie z.B. Trimethoxymethylsilan, gegenüber den Siloxanen (A3) im Unterschuss, umgesetzt werden. Dabei werden hyperverzweigte Siloxane (A4) erhalten, die dann mit Polyisocyanat zur Reaktion gebracht werden, wobei letzteres in einem Überschuss verwendet wird, so dass pro Mol Hydroxyreste der hyperverzweigten Siloxane (A4) mindestens 1 Mol, insbesondere 2 bis 10 Mol, Isocyanateinheiten eingesetzt werden. Der molare Überschuss an Isocyanaten wird vorzugsweise bei der Schaumbildung für die Umsetzung mit Wasser verbraucht.

Gegebenenfalls kann das hyperverzweigte Siloxan (A4) vor der Reaktion mit dem Polyisocyanat funktionalisiert werden. Bevorzugt erfolgt dabei die Funktionalisierung mit Sila-Cyclen der Formeln 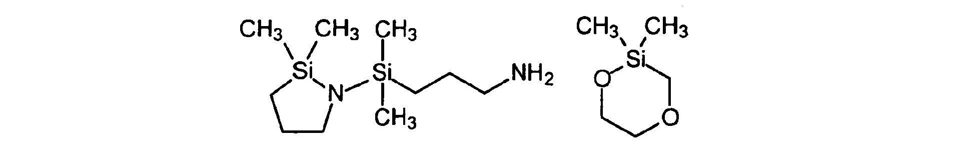 Zusätzlich zu den Siloxanen (A) können die erfindungsgemäßen Zubereitungen weitere Stoffe enthalten, wie z.B. Isocyanate (B), Füllstoffe (C), Emulgatoren (D), physikalische Treibmittel (E), Katalysatoren (F), chemische Treibmittel (G) und Additive (H).

Als gegebenenfalls eingesetzte Isocyanate (B) können sämtliche bekannten Di- oder Polyisocyanate eingesetzt werden.

Bevorzugt werden als Polyisocyanate (B) solche der allgemeinen Formel

Q(NCO)_{b} (V)

eingesetzt, wobei
Q einen b-funktionellen, gegebenenfalls substituierten Kohlenwasserstoffrest und
b eine ganze Zahl von mindestens 2, bevorzugt von 2 bis 10, besonders bevorzugt 2 oder 4, insbesondere 2 bis 3, bedeutet.

Vorzugsweise handelt es sich bei Q um gegebenenfalls substituierte Kohlenwasserstoffreste mit 4 bis 30 Kohlenstoffatomen, besonders bevorzugt um Kohlenwasserstoffreste mit 6 bis 25 Kohlenstoffatomen.

Beispiele für Diisocyanate (B) sind Diisocyanatodiphenylmethan (MDI), sowohl in Form von rohem oder technischem MDI als auch in Form reiner 4,4'- bzw. 2,4'-Isomeren oder deren Zubereitungen, Tolylendiisocyanat (TDI) in Form seiner verschiedenen Regioisomeren, Diisocyanatonaphthalin (NDI), Isophorondiisocyanat (IPDI), 1,3-Bis(1-isocyanato-1-methylethyl)berizene (TMXDI) oder auch von Hexamethylendiisocyanat (HDI). Beispiele für Polyisocyanate (B) sind polymeres MDI (p-MDI), Triphenylmethantriisocyanat oder Biuret- oder Isocyanurattrimerisate der oben genannten Isocyanate. Die Di- und/oder Polyisocyanate (B) können allein oder im Gemisch eingesetzt werden.

Bei den Isocyanaten (B) kann es sich um die gleichen handeln, die bei der Herstellung der Siloxane (A) verwendet werden, insbesondere wenn es sich um ein zweistufiges Herstellungsverfahren handelt. Dabei kann, falls erwünscht, bei der Herstellung der Siloxane (A) Isocyanat gleich im Überschuss eingesetzt und die so erhaltene Mischung vorteilhafterweise zur Herstellung der erfindungsgemäßen Zubereitung gleich weiterverwendet werden.

Falls die erfindungsgemäßen Zubereitungen Isocyanate (B) enthalten, handelt es sich um Mengen von bevorzugt 0,1 bis 50 Gewichtsteilen, besonders bevorzugt 0,1 bis 40 Gewichtsteilen, insbesondere 0,1 bis 30 Gewichtsteilen, jeweils bezogen auf 100 Gewichtsteile hyperverzweigtes Siloxan (A).

Die erfindungsgemäßen Zubereitungen enthalten bevorzugt Isocyanate (B).

Falls Füllstoffe (C) eingesetzt werden, kann es sich um sämtliche nicht verstärkende Füllstoffe, also Füllstoffe mit einer BET-Oberfläche von bis zu 50 m²/g, wie Kreide, oder verstärkende Füllstoffe, also Füllstoffe mit einer BET-Oberfläche von mindestens 50 m²/g, wie Ruß, gefällte Kieselsäure oder pyrogene Kieselsäure, handeln. Insbesondere hydrophobe wie auch hydrophile pyrogene Kieselsäuren stellen dabei einen bevorzugten Füllstoff dar. In einer besonders bevorzugten Ausführungsform der Erfindung wird eine hydrophobe pyrogene Kieselsäure eingesetzt, deren Oberfläche mit Trimethylsilylgruppen modifiziert worden ist. Die eingesetzten Füllstoffe (C) - insbesondere pyrogene Kieselsäuren - können dabei verschiedene Funktionen wahrnehmen. So können sie zur Einstellung der Viskosität der verschäumbaren Mischung verwendet werden. Vor allem aber können sie während der Verschäumung eine "Stützfunktion" wahrnehmen und so zu Schäumen mit besserer Schaumstruktur führen. Schließlich können auch die mechanischen Eigenschaften der resultierenden Schäume durch den Einsatz von Füllstoffen (C) - insbesondere durch den Einsatz von pyrogener Kieselsäure - entscheidend verbessert werden. Des Weiteren kann als Füllstoff (C) auch Aufblätterungsgraphit zugegeben werden.

Falls die erfindungsgemäßen Zubereitungen Füllstoffe (C) enthalten, handelt es sich um Mengen von bevorzugt 0,1 bis 30 Gewichtsteilen, besonders bevorzugt 0,1 bis 20 Gewichtsteilen, insbesondere 0,1 bis 15 Gewichtsteilen, jeweils bezogen auf 100 Gewichtsteile Siloxan (A).

Die erfindungsgemäßen Zubereitungen enthalten bevorzugt Füllstoffe (C).

In vielen Fällen ist es von Vorteil, den schäumbaren Zubereitungen Emulgatoren (D) zuzugeben. Als geeignete Emulgatoren (D), die auch als Schaumstabilisatoren dienen, können beispielsweise alle handelsüblichen durch Polyetherseitenketten modifizierten Siliconoligomere eingesetzt werden, die auch zur Herstellung von herkömmlichen Polyurethanschäumen eingesetzt werden.

Falls Emulgatoren (D) eingesetzt werden, handelt es sich um Mengen von bevorzugt bis zu 6 Gew.-%, besonders bevorzugt von 0,3 bis 3 Gew.-%, jeweils bezogen auf das Gesamtgewicht der schäumbaren Zubereitungen.

Die erfindungsgemäßen Zubereitungen enthalten bevorzugt Emulgatoren (D).

Zudem können die Zubereitungen auch Verbindungen (E) enthalten, die als physikalische Treibmittel dienen können. Als Bestandteil (E) werden bevorzugt niedermolekulare Kohlenwasserstoffe wie z.B. Propan, Butan oder Cyclopentan, Dimethylether, fluorierte Kohlenwasserstoffe wie 1,1-Difluorethan oder 1,1,1,2-Tetrafluorethan oder CO₂ verwendet. Die Schaumherstellung kann dabei gegebenenfalls ausschließlich durch die physikalischen Treibmittel (E) erfolgen. Meist allerdings erfolgt die Schaumbildung vor allem durch eine Reaktion der isocyanatfunktionellen Siloxane mit der Komponente (G) als chemischem Treibmittel. Doch auch in diesem Fall kann ein Einsatz physikalischer Treibmittel (E) in Kombination mit Bestandteil (G) als chemischem Treibmittel vorteilhaft sein, um so zu Schäumen mit geringerer Dichte zu gelangen.

Falls die erfindungsgemäßen Zubereitungen Bestandteil (E) enthalten, handelt es sich um Mengen von bevorzugt 0,1 bis 30 Gewichtsteilen, besonders bevorzugt 0,1 bis 20 Gewichtsteilen, insbesondere 0,1 bis 15 Gewichtsteile, jeweils bezogen auf 100 Gewichtsteile Siloxan (A).

Die erfindungsgemäßen Zubereitungen enthalten bevorzugt kein physikalisches Treibmittel (E).

Des Weiteren können die erfindungsgemäßen schäumbaren Zubereitungen Katalysatoren (F) enthalten, die die Schaumhärtung beschleunigen. Als Katalysatoren (F) sind u.a. Organozinnverbindungen geeignet. Beispiele sind Dibutylzinndilaurat, Dioctylzinndilaurat, Dibutylzinndiacetat, Dibutylzinndioctoat oder Di-butylzinn-bis-(dodecylmercaptid). Zudem kommen auch zinnfreie Katalysatoren (F), wie z.B. Schwermetallverbindungen oder Amine, in Frage. Als Beispiel für zinnfreie Katalysatoren sei Eisen(III)-acetylacetonat, Zink(II)-octoat, Zirkonium(IV)-acetylacetonat und Bismut(III)-neodecanoat genannt. Beispiele für Amine sind Triethylamin, Tributylamin, 1,4-Diazabicyclo[2,2,2]-octan, N,N-Bis-(N,N-dimethyl-2-aminoethyl)-methylamin, N,N-Dimethylcyclohexylamin, N,N-Dimethylphenylamin, Bis-N,N-dimethylaminoethylether, N,N-Dimethyl-2-aminoethanol, N,N-Dimethylaminopyridin, N,N,N,N-Tetramethyl-bis-(2-Aminoethylmethylamin, 1,5-Diazabicyclo[4.3.0]non-5-en, 1,8-Diazabicyclo[5.4.0]undec-7-en, N-Ethyirnorpizoiin oder N,N'-Dimethylaminopyridin.

Die Katalysatoren (F) können einzeln oder als Gemisch eingesetzt werden. Gegebenenfalls können die bei der Herstellung der Siloxane (A) eingesetzten Katalysatoren gleichzeitig auch als Katalysatoren (F) zur Schaumhärtung dienen.

Falls Katalysator (F) eingesetzt wird, handelt es sich um Mengen von bevorzugt 0,1 bis 6,0 Gew.-%, besonders bevorzugt von 0,3 bis 4,0 Gew.-%, jeweils bezogen auf das Gesamtgewicht der erfindungsgemäßen verschäumbaren Zubereitung.

Die erfindungsgemäßen Zubereitungen enthalten bevorzugt Katalysatoren (F).

Als chemische Treibmittel (G) können prinzipiell sowohl Wasser wie auch sämtliche Verbindungen mit bevorzugt mindestens einer gegenüber Isocyanat reaktiven Funktion dienen.

Beispiele für Bestandteil (G) sind aminoalkyl- oder hydroxyfunktionelle Siloxane, die unterschiedlich sind zu Komponente (A) monomere Alkohole, monomere Diole, wie Glycol, Propandiol und Butandiol, monomere Oligoole, wie Pentaerythrit oder Trihydroxymehtylethan, oligomere oder polymere Alkohole mit einer, zwei oder mehreren Hydroxylgruppen, wie Etylen- oder Propylenglykole, Wasser, monomere Amine mit einer, zwei oder mehreren Aminfunktionen, wie Etylendiamin und Hexamethylendiamin, sowie auch oligomere oder polymere Amine mit einer, zwei oder mehreren Aminfunktionen.

Falls Bestandteil (G) eingesetzt wird, handelt es sich bevorzugt um Hydroxyverbindungen, wobei Wasser besonders bevorzugt ist.

Falls Bestandteil (G) eingesetzt wird, handelt es sich um Mengen von bevorzugt 0,1 bis 20 Gewichtsteilen, besonders bevorzugt von 0,1 bis 15 Gewichtsteilen, insbesondere von 0,1 bis 10 Gewichtsteilen, jeweils bezogen auf 100 Gewichtsteile Siloxan (A) .

Vorzugsweise enthalten die erfindungsgemäßen Zusammensetzungen Bestandteil (G) .

Weiterhin kann als Additive (H) auch der Zusatz von Zellregulantien, Thixotropiermitteln und/oder Weichmachern vorteilhaft sein. Zur Verbesserung der Brandbeständigkeit können den schäumbaren Zubereitungen zudem Flammschutzmittel zugesetzt werden, z.B. phosphorhaltige Verbindungen, vor allem Phosphate und Phosphonate, sowie auch halogenierte Polyester und Polyole oder Chlorparaffine.

Falls Additive (H) eingesetzt werden, handelt es sich um Mengen von bevorzugt 0,1 bis 30 Gewichtsteilen, besonders bevorzugt von 0,1 bis 20 Gewichtsteilen, insbesondere von 0,1 bis 15 Gewichtsteilen, jeweils bezogen auf 100 Gewichtsteile Siloxan (A).

Die erfindungsgemäßen Zubereitungen enthalten bevorzugt keine Additive (H).

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Zubereitungen um solche enthaltend
(A) Siloxane gemäß der Formel (I),
   gegebenenfalls
(B) Isocyanate,
   gegebenenfalls
(C) Füllstoffe,
   gegebenenfalls
(D) Emulgatoren,
   gegebenenfalls
(E) physikalische Treibmittel,
   gegebenenfalls
(F) Katalysatoren,
   gegebenenfalls
(G) chemische Treibmittel und
   gegebenenfalls
(H) Additive,
wobei die erfindungsgemäßen Zubereitungen mindestens ein Treibmittel, ausgewählt aus Komponenten (E) und (G) enthalten, insbesondere mindestens (G).

Die erfindungsgemäßen Zubereitungen enthalten außer der Komponente (A) sowie gegebenenfalls einem oder mehreren der Komponenten (B) bis (H) bevorzugt keine weiteren Bestandteile.

Die erfindungsgemäßen Zubereitungen können nun nach beliebigen und an sich bekannten Verfahren, wie einfaches Vermischen der einzelnen Komponenten, hergestellt werden, wobei auch Vormischungen einzelner Bestandteile hergestellt werden können. Dabei können 1-komponentige Systeme wie auch 2-komponentige Systeme hergestellt werden.

Werden die erfindungsgemäßen Zubereitungen in Form von 2-komponentigen Systemen bereitgestellt, was bevorzugt ist, so können die beiden Komponenten der erfindungsgemäßen verschäumbaren Zubereitung alle Bestandteile in beliebigen Kombinationen und Mengenverhältnissen enthalten, mit der Maßgabe, dass eine Komponente nicht gleichzeitig die Bestandteile (A) und (G) bzw. (B) und (G) enthält.

So wird z.B. zur Herstellung der erfindungsgemäßen Zubereitung bevorzugt eine Mischung enthaltend Bestandteil (A), gegebenenfalls Bestandteil (B), gegebenenfalls Bestandteil (C), gegebenenfalls Bestandteil (D) und gegebenenfalls Bestandteil (H) als Komponente 1 zubereitet sowie eine Komponente 2 enthaltend Bestandteil (G), gegebenenfalls Bestandteil (D) und gegebenenfalls Bestandteil (F), die dann zur Herstellung des erfindungsgemäßen Schaumes miteinander vermischt werden.

Es können jedoch auch - falls erwünscht - zur Herstellung der erfindungsgemäßen Zubereitung alle Bestandteile in einem Schritt miteinander vermischt werden. Bei diesen 1-komponentigen Systemen erfolgt die Schaumbildung dann bevorzugt durch Einsatz eines physikalischen Treibmittels (E). Nach dem Aufbringen des Schaums härtet dieser dann durch die Reaktion mit Luftfeuchtigkeit gleich aus.

Die erfindungsgemäßen Zubereitungen sind bevorzugt flüssig bis zähviskos und haben eine Viskosität von bevorzugt 250 bis 10 000 mPas, besonders bevorzugt 500 bis 5 000 mPas bei 25°C.

Die erfindungsgemäßen Zubereitungen dienen bevorzugt zur Herstellung von Schäumen, besonders bevorzugt von Hart- oder Weichschäumen, insbesondere von Weichschäumen.

Ein weiterer Gegenstand der vorliegenden Erfindung ist ein Verfahren zur Herstellung siliconhaltiger Polyurethanschäume, dadurch gekennzeichnet, dass hyperverzweigte Siloxane (A) und mindestens ein Treibmittel vermischt und reagieren gelassen werden.

In einer bevorzugten Ausführungsform des erfindungsgemäßen Verfahrens werden hyperverzweigtes Siloxan (A), Katalysator (F) und chemisches Treibmittel (G) vermischt und reagieren gelassen.

Das erfindungsgemäße Verfahren wird bei Temperaturen von bevorzugt 0 bis 100°C, besonders bevorzugt 10 bis 40°C, insbesondere 15 bis 30°C, durchgeführt.

Das erfindungsgemäße Verfahren wird bevorzugt beim Druck der umgebenden Atmosphäre, also etwa 900 bis 1100 hPa, durchgeführt.

Bei dem erfindungsgemäßen Verfahren wird bevorzugt CO₂ freigesetzt, das größtenteils für den Aufbau der erfindungsgemäßen Schaumstruktur verantwortlich ist.

Ein weiterer Gegenstand der Erfindung sind Schäume, herstellbar durch Umsetzung von hyperverzweigten Siloxanen (A) mit mindestens einem Treibmittel.

Die erfindungsgemäßen Schäume zeichnen sich durch eine feine, offenzellige Schaumstruktur aus. Ihre mechanischen Eigenschaften entsprechen denen kommerziell verfügbarer PU-Schäume.

Die erfindungsgemäßen Schäume weisen eine Dichte von bevorzugt 10 bis 500 kg/m³, besonders bevorzugt 15 bis 200 kg/m³, insbesondere 20 bis 120 kg/m³, auf.

Die erfindungsgemäßen Schäume können überall dort eingesetzt werden, wo auch bisher Polyurethanschäume eingesetzt worden sind. Insbesondere eignen sie sich für Polsterungen, Wärme- und Geräuschisolierungen.

Die erfindungsgemäßen verschäumbaren Zubereitungen haben den Vorteil, dass sie auf sehr einfache Weise und mit den bisher bekannten Methoden aus der PU-Technologie verarbeitet werden können.

Des Weiteren haben die erfindungsgemäßen Zubereitungen den Vorteil, dass sie mit kommerziell leicht verfügbaren Edukten hergestellt werden können.

Ferner haben die erfindungsgemäßen Zubereitungen den Vorteil, dass sie leicht verarbeitbar sind und niedrigviskos hergestellt werden können.

Die erfindungsgemäßen Zubereitungen den Vorteil, dass Silicon-Polyurethanschäume mit geringen Dichte hergestellt werden können.

Das erfindungsgemäße Verfahren zur Herstellung von siliconhaltigen PU-Schäumen hat den Vorteil, dass es einfach in der Durchführung ist.

Des Weiteren haben die erfindungsgemäßen Schäume den Vorteil, dass sie flexibel und äußerst schwer entflammbar sind.

Die erfindungsgemäßen Schäume haben ferner den Vorteil, dass sie hohe mechanische Festigkeiten, insbesondere in Kombination mit geringen Schaumdichten, aufweisen.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Vergleichsbeispiel 1

Zu einer Lösung von 50,00 g eines linearen Organopolysiloxans der Formel H₂N-(CH₂)₃-[Si(CH₃)₂-O]₁₂₉Si(CH₃)₂-(CH₂)₃-NH₂ in 100 ml absolutem Methylethylketon unter Inertgasatmosphäre wurden bei 0°C 5,2 g Tolylendiisocyanat (TDI) gelöst in 50 ml absolutem Methylethylketon über einen Zeitraum von einer Stunde langsam zugetropft. Das so erhaltene Reaktionsgemisch, welches neben 51,7 g Isocyanatosiloxan noch 3,5 g TDI enthielt, wurde dann bei einem Druck von 10 mbar vom Lösungsmittel befreit.

20,00 g des so erhaltenen Prepolymeren wurden mit 0,20 g Bis-(2-dimethylaminoethyl)ether (käuflich erhältlich unter der Bezeichnung "Jeffcat^{®} ZF-20" von Huntsman Corp., D-Hamburg) als Katalysator und 0,15 g Emulgator (käuflich erhältlich unter der Bezeichnung Belsil^{®} DMC 3071VP bei Wacker Chemie AG, D-München) versetzt. Das so erhaltene Gemisch wurde zunächst mit einem schnelllaufenden KPG-Rührer zu einer homogenen Emulsion verarbeitet. Anschließend wurden 0,16 g Wasser schnell zugegeben und wieder durch einen schnelllaufenden KPG-Rührer zu einer homogenen Mischung emulgiert. Nach ca. 5 Sekunden setzte eine exotherme Reaktion mit Schaumentwicklung ein. Die Schaumbildung war nach weiteren ca. 40 Sekunden abgeschlossen, während die Wärmeentwicklung noch ca. 30 Sekunden anhielt. Es resultierte ein farbloser, flexibler, unbrennbarer Weichschaum mit einer Dichte von 130 kg/m³.

### Vergleichsbeispiel 2

Zu einer Lösung von 50,00 g eines linearen Organopolysiloxans der Formel H₂N-(CH₂)₃-[Si(CH₃)₂-O]₁₂₉Si(CH₃)₂-(CH₂)₃-NH₂ in 100 ml absolutem Methylethylketon unter Inertgasatmosphäre wurden bei 0°C 8,7 g Tolylendiisocyanat (TDI) gelöst in 50 ml absolutem Methylethylketon über einen Zeitraum von einer Stunde langsam zugetropft. Das so erhaltene Reaktionsgemisch, welches neben 51,7 g Isocyanatosiloxan noch 6,9 g TDI enthielt, wurde dann bei einem Druck von 10 mbar vom Lösungsmittel befreit.

20,00 g des so erhaltenen Prepolymeren wurden mit 0,20 g Bis-(2-dimethylaminoethyl)ether (käuflich erhältlich unter der Bezeichnung "Jeffcat® ZF-20" von Huntsman Corp., D-Hamburg) als Katalysator und 0,15 g Emulgator (käuflich erhältlich unter der Bezeichnung Belsil® DMC 3071VP bei Wacker Chemie AG, D-München) versetzt. Das so erhaltene Gemisch wurde zunächst mit einem schnelllaufenden KPG-Rührer zu einer homogenen Emulsion verarbeitet. Anschließend wurden 0,28 g Wasser schnell zugegeben und wieder durch einen schnelllaufenden KPG-Rührer zu einer homogenen Mischung emulgiert. Nach ca. 5 Sekunden setzte eine exotherme Reaktion mit Schaumentwicklung ein, die nach weiteren 20 Sekunden mit einem Kollabieren der Schaumstruktur endete.

### Beispiel 1

60,00 g eines linearen Organopolysiloxans der Formel HO-(CH₂)₂-O- (CH₂) -[Si (CH₃)₂-O] ₃₉Si (CH₃)₂- (CH₂) -O- (CH₂)₂-OH und 3,4 g trifunktionelles Isocyanat (käuflich erhältlich unter der Bezeichnung Desmodur® N3300 bei der Bayer MaterialScience AG, D-Leverkusen) wurden unter Inertgasatmosphäre in 100 ml absolutem Aceton umgesetzt. Die Reaktion wurde mit 20 mg Zinn-(II)-(2-ethylhexanoat) katalysiert und 1 Stunde bei 50°C gerührt. Im Anschluss daran wurden 13,0 g Tolylendiisocyanat (TDI) dem Reaktionsgemisch zugefügt und weitere 30 min bei 50°C zur Reaktion gebracht, wobei die Hydroxylgruppen des Organosiloxans vollständig abreagierten. Das so erhaltene Reaktionsgemisch, welches neben 63,5 g hyperverzweigtem Isocyanatosiloxan noch 9,5 g TDI enthielt, wurde dann mit 20 mg Benzoylchlorid versetzt und bei einem Druck von 10 mbar vom Lösungsmittel befreit.

20,00 g des so erhaltenen Gemischs wurden mit 0,20 g Bis-(2-dimethylaminoethyl)ether (käuflich erhältlich unter der Bezeichnung "Jeffcat® ZF-20" von Huntsman Corp., D-Hamburg) als Katalysator und 0,10 g Emulgator (käuflich erhältlich unter der Bezeichnung Belsil® DMC 3071VP bei Wacker Chemie AG, D-München) versetzt. Das so erhaltene Gemisch wurde zunächst mit einem schnelllaufenden KPG-Rührer zu einer homogenen Emulsion verarbeitet. Anschließend wurden 0,32 g Wasser schnell zugegeben und wieder durch einen schnelllaufenden KPG-Rührer zu einer homogenen Mischung emulgiert. Nach ca. 5 Sekunden setzte eine exotherme Reaktion mit Schaumentwicklung ein. Die Schaumbildung war nach weiteren ca. 40 Sekunden abgeschlossen, während die Wärmeentwicklung noch ca. 30 Sekunden anhielt. Es resultierte ein farbloser, flexibler, unbrennbarer Weichschaum mit einer Dichte von 70 kg/m³.

### Beispiel 2

60,00 g eines linearen Organopolysiloxans der Formel HO-(CH₂)₂-O-(CH₂)-[Si(CH₃)₂-O]₃₉Si(CH₃)₂-(CH₂)-O-(CH₂)₂-OH und 3,4 g trifunktionelles Isocyanat (käuflich erhältlich unter der Bezeichnung Desmodur® N3300 bei der Bayer MaterialScience AG, D-Leverkusen) wurden unter Inertgasatmosphäre in 100 ml absolutem Aceton umgesetzt. Die Reaktion wurde mit 20 mg Zinn-(II)-(2-ethylhexanoat) katalysiert und 1 Stunde bei 50°C gerührt. Im Anschluss daran wurden 15,0 g Tolylendiisocyanat (TDI) dem Reaktionsgemisch zugefügt und weitere 30 min bei 50°C zur Reaktion gebracht, wobei die Hydroxylgruppen des Organosiloxans vollständig abreagierten. Das so erhaltene Reaktionsgemisch, welches neben 63,5 g hyperverzweigtem Isocyanatosiloxan noch 11,5 g TDI enthielt, wurde dann mit 20 mg Benzoylchlorid versetzt und bei einem Druck von 10 mbar vom Lösungsmittel befreit.

20,00 g des so erhaltenen Gemischs wurden mit 0,20 g Bis-(2-dimethylaminoethyl)ether (käuflich erhältlich unter der Bezeichnung "Jeffcat® ZF-20" von Huntsman Corp., D-Hamburg) als Katalysator und 0,10 g Emulgator (käuflich erhältlich unter der Bezeichnung Belsil® DMC 3071VP bei Wacker Chemie AG, D-München) versetzt. Das so erhaltene Gemisch wurde zunächst mit einem schnelllaufenden KPG-Rührer zu einer homogenen Emulsion verarbeitet. Anschließend wurden 0,36 g Wasser schnell zugegeben und wieder durch einen schnelllaufenden KPG-Rührer zu einer homogenen Mischung emulgiert. Nach ca. 5 Sekunden setzte eine exotherme Reaktion mit Schaumentwicklung ein. Die Schaumbildung war nach weiteren ca. 40 Sekunden abgeschlossen, während die Wärmeentwicklung noch ca. 30 Sekunden anhielt. Es resultierte ein farbloser, flexibler, unbrennbarer Weichschaum mit einer Dichte von 55 kg/m³.

### Beispiel 3

60,00 g eines linearen Siloxans der Formel HO-[Si(CH₃)₂-O]₃₉-Si(CH₃)₂-OH wurden zunächst mit 0,33 g Methoxymethyltrimethoxysilan 15 min bei 80°C in Gegenwart von 100 ppm Lithiummethylat als Katalysator zur Reaktion gebracht. Anschließend wurden 0,81 g 2,2-Dimethyl-2-sila-1,4-dioxacylohexan zugegeben und weitere 30 min bei 80°C gerührt. Nach beendeter Reaktion wurde das hyperverzweigte Siloxan mit 100 ppm Essigsäure neutralisiert und bei 10 mbar für 15 min im Vakuum von Nebenprodukten befreit. Anschließend wurde dieses in 100 ml absoultem Aceton aufgenommen und mit mit 13,0 g Tolylendiisocyanat versetzt. Die so erhaltene Reaktionsmischung wurde dann für 30 min bei 50°C in Gegenwart von 20 mg Zinn-(II)-(2-ethylhexanoat) als Katalysator gerührt, wobei die Hydroxylgruppen des Organosiloxans vollständig abreagierten. Das Reaktionsgemisch enthält danach neben 64,5 g hyperverzweigtem Isocyanatosiloxan noch 9,5 g TDI. Im Anschluss daran wurde dieses mit 20 mg Benzoylchlorid versetzt und bei einem Druck von 10 mbar vom Lösungsmittel befreit.

20,00 g des so erhaltenen Gemischs wurden mit 0,20 g Bis-(2-dimethylaminoethyl)ether (käuflich erhältlich unter der Bezeichnung "Jeffcat® ZF-20" von Huntsman Corp., D-Hamburg) als Katalysator und 0,15 g Emulgator (käuflich erhältlich unter der Bezeichnung Belsil® DMC 3071VP bei Wacker Chemie AG, D-München) versetzt. Das so erhaltene Gemisch wurde zunächst mit einem schnelllaufenden KPG-Rührer zu einer homogenen Emulsion verarbeitet. Anschließend wurden 0,316 g Wasser schnell zugegeben und wieder durch einen schnelllaufenden KPG-Rührer zu einer homogenen Mischung emulgiert. Nach ca. 5 Sekunden setzte eine exotherme Reaktion mit Schaumentwicklung ein. Die Schaumbildung war nach weiteren ca. 40 Sekunden abgeschlossen, während die Wärmeentwicklung noch ca. 30 Sekunden anhielt. Es resultierte ein farbloser, flexibler, unbrennbarer Weichschaum mit einer Dichte von 70 kg/m³.

## Patentansprüche

1. Verschäumbare Zubereitungen, die hyperverzweigte Siloxane (A) der Formel
V-(R²)ₚ₋ₘ([SiR₂O]ₙ-SiR₂R¹)ₘ (I)
enthalten, worin
V einen p-wertigen Rest bedeutet,
R gleich oder verschieden sein kann und einen einwertigen, gegebenenfalls substituierten Kohlenwasserstoffrest bedeutet,
R¹ ein Rest der Formel
-Yₐ-A-C (O) -NH-Z-NCO (II)
ist, wobei
Y und Z unabhängig voneinander zweiwertige, gegebenenfalls substituierte Kohlenwasserstoffreste, die mit Heteroatomen unterbrochen sein können, bedeuten,
A die Bedeutung von -O- oder -NR³- hat mit R³ gleich Wasserstoffatom oder einwertiger, gegebenenfalls substituierter Kohlenwasserstoffrest und
a 0 oder 1 ist,
R² gleich oder verschieden sein kann und einwertige Reste darstellt,
n eine ganze Zahl größer oder gleich 1 bedeutet,
P eine ganze Zahl größer oder gleich 3 bedeutet und
m eine ganze Zahl größer oder gleich 3 bedeutet,
mit der Maßgabe, dass p größer oder gleich m ist.

2. Verschäumbare Zubereitungen gemäß Anspruch 1, **dadurch gekennzeichnet, dass** a gleich 1 ist.

3. Verschäumbare Zubereitungen gemäß einem oder mehreren der Ansprüche 1 bis 2, **dadurch gekennzeichnet, dass** es sich bei Rest V um mehrwertige organische Reste oder mehrwertige Silylreste handelt.

4. verschäumbare Zubereitungen gemäß einem oder mehreren der Ansprüche 1 bis 3, **dadurch gekennzeichnet, dass** es sich um solche handelt enthaltend
(A) Siloxane gemäß der Formel (I),
gegebenenfalls
(B) Isocyanate,
gegebenenfalls
(C) Füllstoffe,
gegebenenfalls
(D) Emulgatoren,
gegebenenfalls
(E) physikalische Treibmittel, ,
gegebenenfalls
(F) Katalysatoren,
gegebenenfalls
(G) chemische Treibmittel und
gegebenenfalls
(H) Additive,
wobei die erfindungsgemäßen Zubereitungen mindestens ein Treibmittel, ausgewählt aus Komponenten (E) und (G) enthalten.

5. Hyperverzweigte Siloxane (A) der Formel
V- (R²) ₚ₋ₘ ([SiR₂O]ₙ-SiR₂R¹)ₘ (I),
worin
V einen p-wertigen Rest bedeutet,
R gleich oder verschieden sein kann und einen einwertigen, gegebenenfalls substituierten Kohlenwasserstoffrest bedeutet,
R¹ ein Rest der Formel
- Yₐ-A-C(O) -NH-Z-NCO (II)
ist, wobei
Y und Z unabhängig voneinander zweiwertige, gegebenenfalls substituierte Kohlenwasserstoffreste, die mit Heteroatomen unterbrochen sein können, bedeuten,
A die Bedeutung von -O- oder -NR³- hat mit R³ gleich Wasserstoffatom oder einwertiger, gegebenenfalls substituierter Kohlenwasserstoffrest und
a 0 oder 1 ist,
R² gleich oder verschieden sein kann und einwertige Reste darstellt,
n eine ganze Zahl größer oder gleich 1 bedeutet,
p eine ganze Zahl größer oder gleich 3 bedeutet und
m eine ganze Zahl größer oder gleich 3 bedeutet,
mit der Maßgabe, dass p größer oder gleich m ist.

6. Verfahren zur Herstellung siliconhaltiger Polyurethanschäume, **dadurch gekennzeichnet, dass** hyperverzweigte Siloxane (A) und mindestens ein Treibmittel vermischt und reagieren gelassen werden.

7. Verfahren nach Anspruch 6, **dadurch gekennzeichnet, dass** als Treibmitte chemisches Treibmittel (G) eingesetzt wird.

8. Schäume, herstellbar durch Umsetzung von hyperverzweigten Siloxanen (A) mit mindestens einem Treibmittel.

9. Schäume gemäß Anspruch 8, **dadurch gekennzeichnet, dass** sie eine Dichte von 10 bis 500 kg/m³ aufweisen.

## Claims

1. Foamable compositions comprising hyperbranched siloxanes (A) of the formula
V- (R²)ₚ₋ₘ([SiR²O]ₙ-SiR₂R¹)ₘ (I)
in which
V is a radical of value p,
R can be identical or different and is a monovalent, optionally substituted hydrocarbon radical,
R¹ is a radical of the formula
-Yₐ-A-C(O) -NH-Z-NCO (II)
where
Y and Z independently of one another are divalent, optionally substituted hydrocarbon radicals which may be interrupted by heteroatoms,
A has the definition of -O- or -NR³-, with R³ being a hydrogen atom or a monovalent, optionally substituted hydrocarbon radical, and
a is 0 or 1,
R² can be identical or different and represents monovalent radicals,
n is an integer greater than or equal to 1,
p is an integer greater than or equal to 3, and
m is an integer greater than or equal to 3,
with the proviso that p is greater than or equal to m.

2. Foamable compositions according to Claim 1, **characterized in that** a is 1.

3. Foamable compositions according to one or more of Claims 1 to 2, **characterized in that** radical V represents polyvalent organic radicals or polyvalent silyl radicals.

4. Foamable compositions according to one or more of Claims 1 to 3, **characterized in that** it is one comprising
(A) siloxanes of the formula (I),
optionally
(B) isocyanates,
optionally
(C) fillers,
optionally
(D) emulsifiers,
optionally
(E) physical blowing agents,
optionally
(F) catalysts,
optionally
(G) chemical blowing agents, and
optionally
(H) additives,
the compositions of the invention comprising at least one blowing agent selected from components (E) and (G).

5. Hyperbranched siloxanes (A) of the formula
V-(R²)ₚ₋ₘ([SiR²O]ₙ-SiR₂R¹)ₘ (I)
in which
V is a radical of value p,
R can be identical or different and is a monovalent, optionally substituted hydrocarbon radical,
R¹ is a radical of the formula
-Yₐ-A-C(O)-NH-Z-NCO (II)
where
Y and Z independently of one another are divalent, optionally substituted hydrocarbon radicals which may be interrupted by heteroatoms,
A has the definition of -O- or -NR³-, with R³ being a hydrogen atom or a monovalent, optionally substituted hydrocarbon radical, and
a is 0 or 1,
R² can be identical or different and represents monovalent radicals,
n is an integer greater than or equal to 1,
p is an integer greater than or equal to 3, and
m is an integer greater than or equal to 3,
with the proviso that p is greater than or equal to m.

6. Process for preparing silicone-containing polyurethane foams, **characterized in that** hyperbranched siloxanes (A) are mixed with at least one blowing agent and caused to react.

7. Process according to Claim 6, **characterized in that** the blowing agent used is chemical blowing agent (G) .

8. Foams preparable by reacting hyperbranched siloxanes (A) with at least one blowing agent.

9. Foams according to Claim 8, **characterized in that** they have a density of 10 to 500 kg/m³.

## Revendications

1. Préparations moussables, qui contiennent des siloxanes hyperramifiés (A) de formule
V-(R²)ₚ₋ₘ([SiR²O]ₙ-SiR₂R¹)ₘ (I)
où
V signifie un radical p-valent,
R peut être identique ou différent et signifie un radical hydrocarboné monovalent, le cas échéant substitué,
R¹ représente un radical de formule -Yₐ-A-C(O)-NH-Z-NCO (II)
où
Y et Z signifient, indépendamment l'un de l'autre, des radicaux hydrocarbonés divalents, le cas échéant substitués, qui peuvent être interrompus par des hétéroatomes,
A signifie -O- ou -NR³-, R³ représentant un atome d'hydrogène ou un radical hydrocarboné monovalent, le cas échéant substitué, et
a vaut 0 ou 1,
R² peut être identique ou différent et représente des radicaux monovalents,
n signifie un nombre entier supérieur ou égal à 1,
p signifie un nombre entier supérieur ou égal à 3, et
m signifie un nombre entier supérieur ou égal à 3,
à condition que p soit supérieur ou égal à m.

2. Préparations moussables selon la revendication 1, **caractérisées en ce que** a vaut 1.

3. Préparations moussables selon l'une ou plusieurs des revendications 1 et 2, **caractérisées en ce qu'**il s'agit, pour le radical V, de radicaux organiques polyvalents ou de radicaux silyle polyvalents.

4. Préparations moussables selon l'une ou plusieurs des revendications 1 à 3, **caractérisées en ce qu'**il s'agit de préparations contenant
(A) des siloxanes de formule (I), le cas échéant
(B) des isocyanates, le cas échéant
(C) des charges, le cas échéant
(D) des émulsifiants, le cas échéant
(E) des agents gonflants physiques, le cas échéant
(F) des catalyseurs, le cas échéant
(G) des agents gonflants chimiques et le cas échéant
(H) des additifs,
les préparations selon l'invention contenant au moins un agent gonflant, choisi parmi les composants (E) et (G) .

5. Siloxanes hyperramifiés (A) de formule
V-(R²)ₚ₋ₘ ([SiR₂O]ₙ-SiR₂R¹)ₘ (I),
où
V signifie un radical p-valent,
R peut être identique ou différent et signifie un radical hydrocarboné monovalent, le cas échéant substitué,
R¹ représente un radical de formule -Yₐ-A-C(O)-NH-Z-NCO (II)
où
Y et Z signifient, indépendamment l'un de l'autre, des radicaux hydrocarbonés divalents, le cas échéant substitués, qui peuvent être interrompus par des hétéroatomes,
A signifie -O- ou -NR³-, R³ représentant un atome d'hydrogène ou un radical hydrocarboné monovalent, le cas échéant substitué, et
a vaut 0 ou 1,
R² peut être identique ou différent et représente des radicaux monovalents,
n signifie un nombre entier supérieur ou égal à 1,
p signifie un nombre entier supérieur ou égal à 3, et
m signifie un nombre entier supérieur ou égal à 3,
à condition que p soit supérieur ou égal à m.

6. Procédé pour la préparation de mousses de polyuréthane contenant du silicium, **caractérisé en ce qu'**on mélange et laisse réagir des siloxanes hyperramifiés (A) et au moins un agent gonflant.

7. Procédé selon la revendication 6, **caractérisé en ce qu'**on utilise, comme agent gonflant, un agent gonflant chimique (G).

8. Mousses, pouvant être préparées par transformation de siloxanes hyperramifiés (A) avec au moins un agent gonflant.

9. Mousses selon la revendication 8, **caractérisées en ce qu'**elles présentent une densité de 10 à 500 kg/m³.
